## Europäisches Patentamt
## European Patent Office
## Office européen des brevets

(11) Veröffentlichungsnummer: **0 176 012 B1**

# EUROPÄISCHE PATENTSCHRIFT

(45) Veröffentlichungstag der Patentschrift: **18.12.91**

(21) Anmeldenummer: **85111550.1**

(22) Anmeldetag: **12.09.85**

(51) Int. Cl.⁵: **C08L 77/00, C08G 69/28,** //C08L9:00,C08L33:08

Die Akte enthält technische Angaben, die nach dem Eingang der Anmeldung eingereicht wurden und die nicht in dieser Patentschrift enthalten sind.

(54) **Verfahren zur Herstellung von Schlagzähen Polyamid-Formmassen.**

(30) Priorität: **22.09.84 DE 3434821**

(43) Veröffentlichungstag der Anmeldung: **02.04.86 Patentblatt 86/14**

(45) Bekanntmachung des Hinweises auf die Patenterteilung: **18.12.91 Patentblatt 91/51**

(84) Benannte Vertragsstaaten: **BE CH DE FR GB IT LI NL**

(56) Entgegenhaltungen:
EP-A- 0 001 245
EP-A- 0 014 879
EP-A- 0 040 730
EP-A- 0 058 316
DE-A- 2 051 890

(73) Patentinhaber: **BAYER AG**

**W-5090 Leverkusen 1 Bayerwerk(DE)**

(72) Erfinder: **Trabert, Ludwig, Dr.**
**Leydelstrasse 67**
**W-4150 Krefeld(DE)**
Erfinder: **Lindner, Christian, Dr.**
**Riehlerstrasse 200**
**W-5000 Köln 60(DE)**
Erfinder: **Merten, Josef, Dr.**
**Krünsend 30**
**W-4052 Korschenbroich(DE)**
Erfinder: **Haupt, Heinrich, Dr.**
**Bodelschwinghstrasse 15**
**W-4150 Krefeld(DE)**

## Beschreibung

Die Erfindung betrifft ein Verfahren zur Herstellung schlagzäher Mischungen aus Polyamiden und Polymerisaten auf Basis von Polyacrylaten oder Polybutadienen mit verbessertem Verarbeitungsverhalten und verbesserten technologischen Eigenschaften unter Herstellung der Polymerisate nach einem Mehrstufenprozeß.

Polyamid-Formmassen, modifiziert mit Pfropfpolymerisaten auf Basis gepfropfter Polydien- oder Polyacrylatkautschuke, finden breite Anwendung im Sport- und Kfz.-Sektor. Besonders geschätzt werden dabei Eigenschaften wie hohe Schlagzähigkeit und hohe Flexibilität. Für viele Anwendungen reichen allerdings die Alterungsbeständigkeit vor allem unter Wärmeeinfluß, sowie das Fließverhalten nicht aus. Dies gilt besonders für hochlegierte, gefüllte und verstärkte Polyamide.

So zeigen Polyamid-Formmassen, die Pfropfpolymerisate auf Polyacrylat-Basis enthalten (US 36 68 274, US 39 85 703) zwar ein verbessertes Alterungsverhalten gegenüber Polyamid-Formmassen mit gepfropften Polydienkautschuken, aber ein unbefriedigendes Fließverhalten. Außerdem reicht die Tieftemperaturzähigkeit derartiger Formmassen nicht aus. Besonders bei gefüllten und verstärkten Polyamid-Formmassen treten Oberflächenstörungen an Formteilen (z.B. Weißflecken) auf.

Polyamid-Formmassen, die gepfropfte Polydienkautschuke enthalten (DE-A 29 41 025 (US 43 38 406), DE-A 30 19 233, EP-A 58 316), zeigen zwar eine gute Tiefziehtemperatur, aber ein unbefriedigendes thermisches und schlechtes Fließverhalten.

In der EP-A 1245 werden zur Polyamid-Compoundierung gepfropfte Kautschuke verwendet, wobei die Pfropfung der in feinstverteilter Form vorliegenden Latexteilchen erfolgt. Die hieraus hervorgehenden, gepfropften Latexteilchen, zusammmen mit einem Zwangsanfall an Harzpolymerlatex aus den Pfropfmonomeren, werden gemeinsam gefällt.

Ziel der Erfindung war es daher, mit Hilfe teilchenförmiger Pfropfpolymerisate Polyamid-Formmassen zu gewinnen, die ein verbessertes Fließverhalten, bessere Dispergierbarkeit, bessere Oberflächenbeschaffenheit und bessere Zähigkeit aufweisen.

Diese Aufgabe wurde dadurch gelöst, daß teilchenförmige Polymerisate verwendet werden, die über einen Mehrstufenprozeß hergestellt wurden. Dabei wird in einer ersten Stufe das über Emulsionspolymerisation hergestellte und in Latexform vorliegende Pfropfpolymerisat durch Elektrolytzusatz koaguliert, in einer weiteren Stufe polymerisiertes Vinylmonomerharz in Latexform zugesetzt, und gleichzeitig oder im Anschluß an den Latexzusatz wird gegebenenfalls weitere Koagulierungslösung zugesetzt. In der dritten Stufe wird das resultierende Polymerisat von der wäßrigen Phase abgetrennt und zu einem Pulver mit einer durchschnittlichen Teilchengröße von 0,05 bis 5 mm aufgearbeitet.

Gegenstand der Erfindung ist daher ein Verfahren zur Herstellung von thermoplastischen Formmassen aus

A) 40 bis 97 Gew.-%, vorzugsweise 60 bis 96 Gew.-%, insbesondere 70 bis 95 Gew.-% Polyamid und

B) 3 bis 60 Gew.-%, vorzugsweise 4 bis 40 Gew.-%, insbesondere 5 bis 30 Gew.-% eines Polymerisates auf Basis olefinisch ungesättigter Monomere aus

B1) 95 bis 70 Gew.-%, bezogen auf B), vorzugsweise 60 bis 85 Gew.-%, insbesondere 70 bis 75 Gew.-%, wenigstens eines Pfropfkautschuks auf der Basis von teilchenförmigen Kautschuken mit Kautschukgehalten von 0,1 bis 80 Gew.-% mit einer Glasübergangstemperatur $<20\,^\circ$C, und

B2) 5 bis 30 Gew.-%, bezogen auf B), wenigstens eines thermoplastischen, kautschukfreien Vinylmonomerpolymerisates aus Acrylnitril, Methylmethacrylat, Styrol, $\alpha$-Methylstyrol und/oder Alkylacrylat, und der Staudinger-Index der ungepfropften Polymere (B2) im Bereich von 0,1 bis 0,45 ist,

durch Vermischen in der Schmelze bei Temperaturen von mindestens $10\,^\circ$C und höchstens $80\,^\circ$C oberhalb des Schmelzpunktes des Polyamids,

wobei das Polymerisat B) in einem Mehrstufenprozeß hergestellt wird, der

eine Stufe 1, in der das über Emulsionspolymerisation hergestellte und in Latexform vorliegende Polymerisat B1) oder Latexmischungen der Polymerisate B1) und B2) bei Temperaturen $>20\,^\circ$C durch pH-Wert Absenkung und/oder durch Elektrolytzusatz koaguliert werden,

eine Stufe 2, in der in die in der Stufe 1 erhaltene Polymersuspension, Polymerisat B2) oder der Rest von B2) in Latexform in einer solchen Menge eingebracht wird, bis ein Gew.-Verhältnis von B1) zu B2) von 95 bis 70 zu 5 bis 30 erreicht wird, wobei gegebenenfalls gleichzeitig oder im Anschluß an den Latexzusatz weitere Koagulierungslösung zugeführt wird, so daß ein Feststoff/Wasser-Gewichtsverhältnis von 1 : 3 bis 1 : 15 erreicht ist, und eine nachfolgende

Stufe 3, in der das resultierende Polymerisat von der wäßrigen Phase abgetrennt und zu einem Pulver mit einer durchschnittlichen Teilchengröße von 0,05 bis 5 mm aufgearbeitet wird,

umfaßt`

Als Polyamid A eignen sich alle thermoplastischen Polyamide, vorzugsweise teilkristalline Polyamide. So kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylenhexamethylendiamin und/oder 2,4,4-Trimethylhexamethylendiamin und/oder Isophorondiamin besteht.

Außerdem sind Polyamide geeignet, die teilweise aus Lactamen mit 6 bis 12 C-Atomen und unter Mitverwendung einer oder mehrerer der obengenannten Ausgangskomponenten hergestellt worden sind.

Besonders bevorzugte teilkristalline Polyamide sind Polyamid-6, Polyamid-66 oder entsprechende Copolyamide.

Die Polyamide sollen vorzugsweise eine relative Viskosität (gemessen an einer 1 gew.-%igen Lösung in m-Kresol bei 25°C) von 2,0 bis 5,0, besonders bevorzugt von 2,5 bis 4,0 aufweisen.

Die teilchenförmigen Pfropfpolymerisate B1) der erfindungsgemäßen Formmassen enthalten insbesondere Kautschuke aus der Reihe der Dien- oder Alkylacrylat-homo- oder -copolymerisate aus Styrol, Acrylnitril, Methylmethacrylat, Vinylacetat oder Vinylether. Sie können unvernetzt, teilvernetzt oder hochvernetzt vorliegen und besitzen teilchenförmige Strukturen einer Größe von 50 bis 1000 μm. Bevorzugte Pfropfmonomere für die geschilderten Pfropfgrundlagen sind Methylmethacrylat, Styrol, Acrylnitril oder Mischungen davon.

Hergestellt werden diese Pfropfpolymerisate B1) durch Emulsionspolymerisation. Die Vinylmonomeren, insbesondere Methylmethacrylat, Styrol, Acrylnitril, α-Methylstyrol oder Mischungen davon, werden auf Emulsionskautschuke mit Glasübergangstemperaturen <20°C aufgepropft.

Bevorzugte Acrylatkautschuke als Pfropfgrundlage sind Produkte, die einen vernetzten Dienkautschuk aus einem oder mehreren konjugierten Dienen wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage kann 0,1 bis 80, bevorzugt 10 bis 50 Gew.-% betragen. Schale und Kern der Pfropfgrundlage können unabhängig voneinander unvernetzt, teilvernetzt oder hochvernetzt sein. Die Dienkautschuke oder Acrylatkautschuke sollen vorzugsweise einen Gelgehalt von ≧80, besonders bevorzugt ≧90 Gew.-% aufweisen. Vorzugsweise beträgt der Kautschukanteil der Pfropfpolymerisate B1) 60 bis 85, besonders bevorzugt 70 bis 75 Gew.-%.

Bevorzugte Pfropfmonomere für diese Acrylautkautschukgrundlagen mit Kern-Mantel-Struktur sind Methylmethacrylat, Styrol, α-Methylstyrol, Acrylnitril oder Mischungen dieser Monomeren. Besonders bevorzugtes Pfropfmonomer ist Methylmethacrylat.

Beschrieben sind derartige Pfropfkautschuke mit Kern-Mantel-Struktur in DE-A 30 06 804.

Als thermoplastische, kautschukfreie Vinylpolymerisate B2) können verwendet werden; Polymerisate von Methylmethacrylat, Alkylacrylate, Acrylnitril, Styrol, α-Methylstyrol oder Mischungen daraus, wobei diese Vinylpolymerisate unvernetzt, teilvernetzt oder hochvernetzt vorliegen können. Sie können durch Emulsionspolymerisation hergestellt werden. Vorzugsweise sind sie unvernetzt und haben Staudingerindices $[\eta]$ *), gemessen in DMF bei 25°C, von 0,1 bis 0,45, vorzugsweise von 0,15 bis 0,4 dl/g.

Bevorzugt sind Polymethylmethacrylat, Styrol/Acrylnitril-Copolymerisate, Methylmethacrylat/Acrylnitril-Copolymerisate, Styrol/Methylmethacrylat Copolymerisate und α-Methylstyrolcopolymerisate.

Die Polymerisatgemische B) werden hergestellt, indem man
in einer ersten Stufe Latices der Pfropfpolymerisate B1) gegebenenfalls nach Stabilisierung z.B. mit phenolischen Antioxidantien, bei 20 bis 100°C, bevorzugt 50 bis 100°C, durch Säuren, Basen oder wasserlösliche Salze, gegebenenfalls unter Zusatz von Wasser koaguliert, wobei unter Rühren eine sedimentierende Suspension der Polymeren gebildet wird, dann
in einer zweiten Stufe Polymeres B2) in Latexform einer solchen Menge einbringt, bis das gewünschte Gewichtsverhältnis von B1) im Bereich von 95-70 Gew.-% B1) und 5-30 Gew.-% B2) erreicht ist, wobei gegebenenfalls Wasser und Koaguliermittel nachgesetzt wird, so daß eine Suspension mit einem Feststoff/Wasser-Gewichtsverhältnis von 1:3 bis 1:15 resultiert, und anschließend
in einer dritten Stufe das resultierende Polymerisatgemisch aus der Suspension abtrennt, z.B. durch Filtration oder Zentrifugieren und anschließend trocknet, wobei ein Pulver mit einem durchschnittlichen Teilchendurchmesser von 0,05 bis 5 mm erhalten wird.

Die Koagulation kann halbkontinuierlich oder vollkontinuierlich durchgeführt werden, bevorzugt ist die

*)
Zur Definition von $[\eta]$ siehe U. Hoffmann et al. "Polymeranalytik I und II" Georg Thieme Verlag, Stuttgart, 1977

3

kontinuierliche Arbeitsweise.

Die so hergestellten Polymerisate B) zeigen eine stark verbesserte Rieselfähigkeit, wobei die Dosierbarkeit zur Herstellung der erfindungsgemäßen Formmassen verbessert wird und dadurch auch eine optimale Dispergierung im Polyamid erfolgen kann, wobei Legierungen mit besonders hochwertigem Eigenschaftsniveau gebildet werden.

Die erfindungsgemäßen Formmassen können übliche Additive, wie Gleit- und Entformungsmittel, Nucleierungsmittel, Stabilisatoren, Füll- und Verstärkungsstoffe, Flammschutzmittel sowie Farbstoffe enthalten.

Die erfindungsgemäßen Formmassen können bis zu 60 Gew.-%, bezogen auf die Gesamtformmassen, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Als Flammschutzmittel kommen alle bekannten Flammschutzmittel in Frage, wie z.B. cyclische Chlorverbindungen, Melamin und dessen Salze, wie Melamincyanurat oder Melaminsulfat oder roter Phosphor.

Die Herstellung der Formmassen kann in den üblichen Mischaggregaten, wie Walzen, Knetern, Ein- oder Mehrwellenextrudern erfolgen.

Wenn auch in den meisten Fällen sämtliche Komponenten zweckmäßigerweise in einem Schritt gemischt werden, kann es manchmal auch empfehlenswert sein, eine oder zwei Komponenten erst zu einem späteren Zeitpunkt zuzumischen.

So können die erfindungsgemäßen Formmassen auf den genannten Mischaggregaten hergestellt werden, indem die beiden Komponenten A und B gemeinsam aufgeschmolzen und homogenisiert werden, oder indem das Pfropfpolymerisat B in die Schmelze des Polyamids A eingearbeitet wird.

Die Temperatur bei der Herstellung der Mischungen sollte mindestens 10 $^\circ$ C und zweckmäßig höchstens 80 $^\circ$ C oberhalb des Schmelzpunktes des Polyamids liegen.

Die erfindungsgemäßen Formmassen zeichnen sich durch eine verbesserte Zähigkeit aus. Ein herausragendes Merkmal ist die Verbesserung der Oberflächenbeschaffenheit von verstärkten und/oder gefüllten Formmassen.

Entsprechend diesen Eigenschaftsverbesserungen eignen sich die erfindungsgemäßen Formmassen vor allem zur Herstellung von Spritzguß- und Extrusionsformteile, die sichtbar angebracht werden, wie z.B. im Kfz.-Bereich für Radkappen, Stoßfänger, Karosserieteile.

Beispiele

A) Verwendete Komponenten

I. Polyamid-6 mit einer relativen Viskosität (gemessen an einer 1 gew.-%igen Lösung in m-Kresol bei 25 $^\circ$ C) von 3.5

II. Polyamid-66 mit einer relativen Viskosität von 3.5, gemessen wie I.

III. Acrylatpfropfkautschuk (mit Butadienkern)

1. Grobteilige Acrylatkautschukgrundlage

In einem Reaktor wird unter Rühren folgende Emulsion bei 65 $^\circ$ C bis zum praktisch vollständigen Monomerumsatz innerhalb von ca. 22 Stunden polymerisiert:

| | |
|---|---|
| 100,0 Gew.-Teile | Butadien |
| 1,8 Gew.-Teile | Na-Salz der disproportionierten Abietinsäure |
| 0,247 Gew.-Teile | Natriumhydroxid |
| 0,3 Gew.-Teile | n-Dodecylmercaptan |
| 1,029 Gew.-Teile | Na-ethylendiamintretraacetat |
| 0,023 Gew.-Teile | Kaliumpersulfat |
| 176 Gew.-Teile | Wasser |

Es wird ein Latex erhalten, der Butadienpolymerisatteilchen eines mittleren Durchmessers ($d_{50}$) von 0,1 µm in einer Konzentration von ca. 35 bis 36 % enthält. Die Polybutadienteilchen besitzen Gelgehalte von 90 bis 95 Gew.-% (gemessen in Toluol bei 23 $^\circ$ C).

Pfropfung auf den Dienkautschuklatex III.1

Gearbeitet wird mit folgenden Lösungen:

| | | |
|---|---|---|
| Vorlage 1: | 12,4 Gew.-Teile des Dienkautschuklatex von III.1 | |
| | 313 Gew.-Teile Wasser | |
| Vorlage 2: | 0,82 Gew.-Teile Kaliumperoxidsulfat | |
| | 20 Gew.-Teile Wasser | |

| Zulauf 1: | 629 Gew.-Teile n-Butylacrylat |
| | 1 Gew.-Teil Triallylcyanurat |
| Zulauf 2: | 700 Gew.-Teile Wasser |
| | 5,9 Gew.-Teile Na-Salz von $C_{14}$-$C_{16}$-Alkylsulfonsäuren |

Bei 65 bis 68°C wird Vorlage 1 aufgeheizt, dann speist man 24 Gew.-Teile von Zulauf 1 ein. Nach Initiierung mit Vorlage 2 werden der Rest von Zulauf 1 und Zulauf 2 innerhalb von 5 Stunden zudosiert. Anschließend rührt man 4 Stunden nach. Der Latex besitzt einen Feststoffgehalt von 37 %. Die Latexteilchengröße beträgt 0,4 µm. Das Polymer besitzt einen Gelgehalt von 93 Gew.-% und einen Quellungsindex von 8, gemessen in DMF bei 23°C.

III.2 Herstellung der Pfropfkautschuke

Bestehend aus 70 Gew`-% Acrylatkautschuk III.1 und 30 Gew.-% Polymethylmethacrylat.

III.2.1 Herstellung durch direkte Pfronfpolymerisation in Emulsion (Vergleichsbeispiel)

In einem Reaktor werden folgende Lösungen bzw. Latices polymerisiert

| Vorlage 1: | 1892 Gew.-Teile Latex III.1 |
| Vorlage 2: | 3 Gew.-Teile Kaliumperoxydisulfat |
| | 120 Gew.-Teile Wasser |
| Zulauf 1: | 300 Gew.-Teile Methylmethacrylat |
| Zulauf 2: | 340 Gew`-Teile Wasser |
| | 8 Gew.-Teile Na-Salz von $C_{14}$-$C_{16}$-Alkylsulfonsäuren |

Bei 70°C wird in die Vorlage 1 die Vorlage 2 eingespeist. Innerhalb von 4 Stunden werden bei 70°C getrennt Zulauf 1 und Zulauf 2 eindosiert. Anschließend läßt man 4 Stunden bei 70°C auspolymerisieren. Danach stabilisiert man den Latex mit 1,2 Gew,-Teilen (pro 100 Gew.-Teile Pfropfpolymer) phenolischer Antioxidantien.

Der Latex wird dann mittels einer Lösung von $MgSO_4$ in Wasser koaguliert, filtriert, gewaschen und bei 70°C getrocknet (Typ A - vergleiche Tabelle 3).

Das Pfropypolymer enthält 15 Gew.-% nicht aufgepropftes Polymethylmethacrylat mit einem Staudinger-Index $[\eta]$, gemessen in DMF bei 25°C, von 0,27 dl/g.

III.2.2 Herstellung durch gekoppelte Emulsionspfropfpolymerisation und anschließender Pfropfpolymerisation in gebrochener Emulsion (Vergleichsversuch - entsprechend der gleichzeitig eingereichten EP-A 176 111)

In einem Reaktor werden mit folgenden Lösungen bzw. Latices polymerisiert:

| Vorlage 1: | 2162 Gew.-Teile Latex III.1 |
| Vorlage 2: | 2 Gew`-Teile Kaliumperoxydisulfat |
| | 120 Gew.-Teile Wasser |
| Zulauf 1: | 200 Gew.-Teile Methylmethacrylat |
| Zulauf 2: | 6 Gew.-Teile Na-Salz von $C_{14}$-$C_{16}$-Alkylsulfonsäuren |
| | 396 Gew.-Teile Wasser |

Bei 70°C wird in die Vorlage 1 die Vorlage 2 eingespeist, danach dosiert man Zulauf 1 und Zulauf 2 innerhalb von 4 Stunden bei 70°C zu, Anschließend läßt man 4 Stunden bei 70°C auspolymerisieren.

Der Pfropfpolymerlatex wird wie folgt weiterbehandelt:

| Vorlage 1: | 5525 Gew.-Teile Wasser |
| | 107 Gew.-Teile ($MgSO_4$ x $H_2O$ (Bittersalz)) |
| Zulauf 1: | 4106 Gew.-Teile Latex (s.o.) |
| Zulauf 2: | 160 Gew.-Teile Methylmethacrylat |
| Aktivator: | 1,3 Gew.-Teile Kaliumperoxydisulfat |
| | 78 Gew.-Teile Wasser |

Unter gutem Rühren wird Vorlage 1 auf 70 bis 73°C aufgeheizt. Innerhalb von 1 Std. dosiert man den Zulauf 1 hinzu, Dann wird Zulauf 2 innerhalb 30 min eingespeist, man aktiviert anschließend mit der Aktivatorlösung. Man heizt auf 80°C auf, rührt 2 Stunden, heizt auf 90°C und rührt weitere 2 Stunden, Nach anschließender Stabilisierung mit 2 Gew.-Teilen phenolischer Antioxidantien, wird über Filtration, Waschung und Trocknung aufgearbeitet,

Das Pfropfpolymer (Typ B - entsprechend der Tabelle 3) enthält 16 Gew.-% nicht aufgepropftes Polymethylmethacrylat mit einem Staudinger-Index $[\eta]$, gemessen in DMF bei 25°C, von 0,31 dl/g.

III.2.3 Herstellung der Pfropfkautschuke im Sinne der Erfindung

Die Emulsionspfropfpolymerisation die in III.2.2 beschrieben ist, wird wiederholt. Der Pfropfcopolymerlatex wird, wie folgt, weiterbehandelt.

In einer auf 70 bis 80°C aufgeheizten Vorlage aus
1500 Gew.-Teilen $MgSO_4$ x $H_2O$ (Bittersalz)

5000 Gew.-Teilen Wasser

wird unter Rühren 2602 Gew.-Teile des Pfropfcopolymerlatex III.2.2, der mit phenolischen Antioxidantien stabilisiert ist, eingetragen, dabei tritt Koagulation des Latex unter Bildung einer sedimentierenden Pfropfcopolymeraufschlämmung auf, die unter Rühren gehalten wird. Anschließend werden 2886 Gew.-Teile Vinylmonomerharzlatex III.2.3.1 hinzugegeben, man kühlt ab, filtriert, wäscht und trocknet bei 70 bis 80°C.

Die Pfropfcopolymerisate enthalten 18 Gew.-% nicht aufgepfropftes Vinylmonomerharz, die Staudinger-Indices [$\eta$] dieser Produkte sind Mischungen auf 0,16 (aus dem Emulsionsprozeß) und den [$\eta$]-Werten der Produkte III.2.3.1.1 bis 2.3.1.5.

III.2.3.1 Herstellung der Vinylmonomerharzlatices

In eine auf 70°C vorgelegte Lösung von 980 Gew.-Teile Wasser und 5 Gew.-Teile Na-Salz von $C_{14}$-$C_{16}$-Alkylsulfonsäuren werden 6 Gew.-Teile Kaliumperoxydisulfat, gelöst in 50 Gew.-Teile Wasser, eingegeben. Bei 70°C dosiert man innerhalb von 4 Stunden folgende Lösung getrennt ein:

Lösungen a)

   x Gew.-Teile     Monomere (siehe Tabelle 1)
   y Gew.-Teile     tert.-Dodecylmercaptan

Lösung b)

   700 Gew.-Teile     Wasser
   20 Gew.-Teile     Na-Salz von $C_{14}$-$C_{16}$-Alkylsulfonsäuren.

Es wird innerhalb von 4 Stunden nach Zulauf der Lösungen auspolymerisiert. Die Latices besitzen einen Feststoffgehalt von 34,9 Gew.-%`

Tabelle 1   Eingesetzte Lösungen a)

| Produkt | III.2.3.1.1 | III.2.3.1.2 | III.2.3.1.3 | III.2.3.1.4 | III.2.3.1.5 |
|---|---|---|---|---|---|
| (Gew.-Tle) (x) | 993 MMa[1] | 933 MMa | 933 MMa | 833 MMa 100 S[2] | 933 MMa |
| (Gew.-Tle) (y) | 9 DDM[3] | 6 DDM | 4 DDM | 9 DDM | 1 DDM |
| Typ (vgl. Tab. 7) | C | D | E | F | G |

1) Methylmethacrylat

2) Styrol

3) tert.-Dodecylmercaptan

EP 0 176 012 B1

**Tabelle 2** Staudinger-Indices [1] der Produkte III.2.3.1.1 bis III.2.3.1.5

| Produkt | III.2.3.1.1 | III.2.3.1.2 | III.2.3.1.3 | III.2.3.1.4 | III.2.3.1.5 |
|---|---|---|---|---|---|
| $[\mu]$ DMF (dl/g) | 0,19 | 0,28 | 0,45 | 0,23 | 0,67 |
| Typ (vgl. Tab. 7) | C | D | E | F | G |

1) Staudinger-Index $[\mu]$ gemessen in DMF bei 25° C

## III.2.4 Vergleichsversuch zum Erfindungsgegenstand

Die in III.2.2 hergestellte Pfropfcopolymer-Emulsion (Latex) wird mit einem in III.2.3.1 hergestellten Vinylmonomerharzlatex (des Produktes III.2.3.1.1) abgemischt im Verhältnis 90 Gew.-Teile III.2.2 und 10 Gew.-Teile III.2.3.1.1. Die Latexmischung wird dann mittels Bittersalzlösung bei 70 bis 90° C koaguliert, filtriert, getrocknet. Der nicht aufgepfropfte Harzanteil dieses Produktes ist identisch mit dem des Polymerisates mit III.2.2.

IV.1 Grobteilige Butadienkautschukgrundlage

Nach folgender Vorschrift wird bei 60 bis 80°C innerhalb von ca. 110 Stunden folgende Emulsion polymerisiert:

| | |
|---|---|
| 100,0 Gew.-Teile | Butadien |
| 70 Gew.-Teile | Wasser |
| 1,146 Gew.-Teile | N-Salz der disproportionierten Abietinsäure |
| 0,055 Gew.-Teile | ethylendiamintetraessigsaures Na |
| 0,137 Gew.-Teile | Natriumhydroxid |
| 0,028 Gew.-Teile | Natriumhydrogencarbonat |
| 0,282 Gew.-Teile | Kaliumpersulfat |

Es wird ein Latex erhalten, der Polybutadienteilchen eines mittleren Durchmessers ($d_{50}$) von 0,4 $\mu$m in einer Konzentration von ca. 58 Gew.-% enthält. Die Polybutadienteilchen besitzen Gelgehalte von 90 bis 91 Gew.-% (gemessen in Toluol bei 23°C).

IV.2 Herstellung der Pfropfkautschuke

IV.2.1 Herstellung durch direkte Pfropfpolymerisation in Emulsion (Vergleichsversuch)

In einem Reaktor werden vorgelegt (bei 65°C):

| | |
|---|---|
| 4200 Gew.-Teile | Latex IV.1 |
| 1500 Gew.-Teile | Wasser |

Nach Initiierung mit

| | |
|---|---|
| 6 Gew.-Teilen | Kaliumperoxydisulfat |
| 200 Gew.-Teile | Wasser |

werden folgende Lösungen innerhalb von 4 Stunden bei 65°C zugegeben:

a)

| | |
|---|---|
| 826 Gew.-Teile | Methylmethacrylat |

b)

| | |
|---|---|
| 1600 Gew.-Teile | Wasser |
| 40 Gew.-Teile | Na-Salz von $C_{14}$-$C_{16}$-Alkylsulfonsäuren. |

Anschließend wird 4 Stunden bei 65°C auspolymerisiert. Nach Stabilisierung mit 2 Gew.-% phenolischer Antioxidantien, bezogen auf Polymerfeststoff, wird mittels essigsaurer Bittersalzlösung koaguliert, gewaschen, getrocknet.

IV.2.2 Herstellung der Butadienpfropfkautschuke im Sinne der Erfindung

Es wird analog der Vorschrift IV.2.1 vorgegangen. Als Lösungen a) und b) werden eingesetzt:

a)

| | |
|---|---|
| 620 Gew.-Teile | Methylmethacrylat |

b)

| | |
|---|---|
| 860 Gew.-Teile | Wasser |
| 40 Gew.-Teile | Na-Salz der disproportionierten Abietinsäure |
| 30 Gew.-Teile | 1n-Natronlauge. |

Nach Auspolymerisieren und Stabilisieren des Latex wird der Latex bei 70°C in folgende Lösung unter Rühren eingetragen:

| | |
|---|---|
| 1500 Gew.-Teile | Wasser |
| 300 Gew.-Teile | Bittersalz |
| 300 Gew.-Teile | Essigsäure |

Nach vollständiger Koagulation des Latex werden 440 Gew.-Teile des Harzlatex III.2.3.1.1 eindosiert. Nach Aufheizen auf 98°C wird abgekühlt, filtriert, gewaschen und getrocknet.

Zusammensetzung der Produkte

Die Produkte IV.2.1 und IV.2.2 sind direkt miteinander vergleichbar und besitzen einen Kautschukgehalt von 75 Gew.-% und sind mit 25 Gew.-% Methylmethacrylat gepfropft.

Tabelle 4   Zusammensetzung der Pfropfprodukte

| Typ | Herstellung nach | Staudinger-Index [η] dl/g | ungepfropftes Vinylmonomerharz | |
|-----|------------------|---------------------------|------------------|--------|
|     |                  |                           | Typ | Gew.-% |
| K   | IV.2.1 (Vergleich) | 0,27 | MMA | 15 |
| L   | IV.2.2 | 0,19 | MMA | 10 |

Tabelle 3   Zusammensetzung der Pfropfprodukte

| Typ | Herstellung nach | Staudinger-Index dl/g | ungepfropft |
|---|---|---|---|
| A | III.2.1 (Vergleich) | 0,27 | MMA[1] 15 |
| B | III.2.2 (Vergleich) | 0,31 | MMA 16 |
| C | III.2.3.1.1 | 0,19 | MMA 10 |
| D | III.2.3.1.2 | 0,28 | MMA 10 |
| E* | III.2.3.1.3 | 0,45* | MMA 10 |
| F | III.2.3.1.4 | 0,23 | MMA-S[2] 10 |
| G | III.2.3.1.5 (Vergleich) | 0,67 | MMA 10 |
| H | III.2.2 (Vergleich) | 0,27 | MMA 10 |
| I | III.2.4 (Vergleich) | 0,31 | MMA 16 |

1) Methylmethacrylat
2) Methylmethacrylat-Styrol-Copolymerisat
*) weniger bevorzugt

B. Herstellung und Prüfung der Formmassen

Beispiele 1 bis 22

Auf einem kontinuierlich arbeitenden Doppelwellenextruder wurden die Komponenten aufgeschmolzen und homogenisiert. Die Zylindertemperaturen wurden so gewählt, daß die in den Tabellen 5 bis 7 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer Spritzgußmaschine Normkleinstäbe hergestellt. Geprüft wurde die Kerbschlagzähigkeit (nach DIN 53 453) bei den angegebenen Temperaturen und die Fließlänge.

Beispiele 23 bis 28

Analog den Versuchen 1 bis 22 wurde das Pfropfpolymerisat mit geschmolzenem Polyamid auf dem Extruder gemischt. Anschließend wurden in die gemischte Schmelze Schnittglasfasern von 6 mm Länge dosiert und homogen verteilt.

Nach dem Entgasen der Schmelze vor der Düse, dem Austragen des Schmelzstranges in Wasser, Granulieren und Trocknen wurden Normkleinstäbe, wie vorher beschrieben hergestellt. Geprüft wurde die Kerbschlagzähigkeit (nach DIN 53 453). Weiterhin wurde eine Glanzwertbestimmung nach ASTM-D 435 durchgeführt. Ergebnisse siehe Tabelle 7.

EP 0 176 012 B1

Tabelle 5   Zusammensetzung und Eigenschaften der Formmassen

| Beispiel | Komponente | | | | Kerbschlagzähigkeit | | Fließspirale (cm) |
| | I | | III/IV | | +20° C | -20° C | |
| | Polyamid | | Pfropfprodukt | | | | |
| | Typ | Gew.-% | Typ | Gew.-% | | | |
| --- | --- | --- | --- | --- | --- | --- | --- |
| 1 | PA-6 | 80 | A | 20 (Vergleich) | 35 | 8 | 27 |
| 2 | PA-6 | 80 | B | 20 (Vergleich) | 45 | 10 | 28 |
| 3 | PA-6 | 80 | C | 20 | 50 | 13 | 30 |
| 4 | PA-6 | 80 | D | 20 | 50 | 15 | 35 |
| 5 | PA-6 | 80 | E | 20 | 50 | 12 | 30 |
| 6 | PA-6 | 80 | F | 20 | 45 | 10 | 26 |
| 7 | PA-6 | 80 | G | 20 (Vergleich) | 40 | 8 | 26 |
| 8 | PA-6 | 80 | H | 20 (Vergleich) | 43 | 10 | 26 |
| 9 | PA-6 | 80 | I | 20 (Vergleich) | 38 | 8 | 25 |
| 10 | PA-6 | 80 | K | 20 (Vergleich) | 50 | 20 | 17 |
| 11 | PA-6 | 80 | L | 20 | 65 | 45 | 25 |

Die Massetemperatur im Etruder betrug 280° C, in der Spritzgußmaschine 270° C; die Form-temperatur betrug 80° C. Die Gewichtsangaben beziehen sich auf die Formmassen.

## Tabelle 6    Zusammensetzung und Eigenschaften der Formmassen

| Beispiel | Komponente | | | | Kerbschlagzähigkeit $(kJ/m^2)$ | | Fließspirale (cm) |
| | II Polyamid | | III/IV Pfropfprodukt | | $+20^0$ C | $-20^0$ C | |
| | Typ | Gew.-% | Typ | Gew.-% | | | |
|---|---|---|---|---|---|---|---|
| 12 | PA-66 | 80 | A (Vergleich) | 20 | 20 | 6 | 35 |
| 13 | PA-66 | 80 | B (Vergleich) | 20 | 42 | 8 | 38 |
| 14 | PA-66 | 80 | C | 20 | 45 | 10 | 40 |
| 15 | PA-66 | 80 | D | 20 | 52 | 13 | 45 |
| 16 | PA-66 | 80 | E | 20 | 46 | 12 | 45 |
| 17 | PA-66 | 80 | F | 20 | 44 | 10 | 40 |
| 18 | PA-66 | 80 | G (Vergleich) | 20 | 38 | 8 | 36 |
| 19 | PA-66 | 80 | H (Vergleich) | 20 | 40 | 10 | 38 |
| 20 | PA-66 | 80 | I (Vergleich) | 20 | 35 | 8 | 36 |
| 21 | PA-66 | 80 | K (Vergleich) | 20 | 50 | 15 | 25 |
| 22 | PA-66 | 80 | L | 20 | 55 | 30 | 35 |

Die Massetemperatur im Extruder und in der Spritzgußmaschine betrug $280^0$ C. Die Formtemperatur betrug $90^0$ C. Die Gewichtsangaben beziehen sich auf die Formmassen.

EP 0 176 012 B1

Tabelle 7   Zusammensetzung und Eigenschaften der Formmassen

| Beispiel | Komponente I Polyamid | | Komponente III/IV Pfropfprodukt | | Glasfaser | Kerbschlagzähigkeit (kJ/m²) 20°C | Glanzwertbestimmung (nach ASTM-D 435) |
|---|---|---|---|---|---|---|---|
| | Typ | Gew.-% | Typ | Gew.-% | | | |
| 23[2) | PA-6 | 60 | A | 10 (Vergleich) | 30 | 18 | 62 |
| 24[2) | PA-6 | 60 | B | 10 (Vergleich) | 30 | 20 | 65 |
| 25 | PA-6 | 60 | C | 10 | 30 | 30 | 80 |
| 26 | PA-6 | 60 | D | 10 | 30 | 17 | 60 |
| 27 | PA-6 | 60 | E | 10 | 30 | 20 | 65 |
| 28 | PA-6 | 60 | F | 10 | 30 | 26 | 75 |

1) durchgeführt an 118 mm ø Rundscheibe (mit steigender Glanzwertzahl nimmt die Oberfläche zu)

2) Vergleichsbeispiele

Die im Test genannten Latexteilchengrößen sind $d_{50}$-Werte und wurden durch Ultrazentrifugenmessen bestimmt (siehe dazu: W. Scholtan et. al. Colloid Z. Polymere, 250 (1972), Seite 783).

**Patentansprüche**

1. Verfahren zur Herstellung von thermoplastischen Formmassen aus

   A) 40 bis 97 Gew.-% Polyamid und

   B) 3 bis 60 Gew.-% eines Polymerisates auf Basis olefinisch ungesättigter Monomere aus

      B1) 95 bis 70 Gew.-%, bezogen auf B), wenigstens eines Pfropfkautschuks auf der Basis von teilchenförmigen Kautschuken mit Kautschukgehalten von 0,1 bis 80 Gew.-% mit einer Glasübergangstemperatur <20°C und

      B2) 5 bis 30 Gew.-%, bezogen auf B), wenigstens eines thermoplastischen kautschukfreien Vinylmonomerpolymerisates aus Acrylnitril, Methylmethacrylat, Styrol, $\alpha$-Methylstyrol und/oder Alkylacrylat, und der staudinger-Index [$\eta$] der ungepfropften Polymere (B2), gemessen in DMF bei 25°C, im Bereich von 0,10 bis 0,45 dl/g ist,

durch Vermischen in der Schmelze bei Temperaturen von mindestens 10°C und höchstens 80°C oberhalb des Schmelzpunktes des Polyamids,

wobei das Polymerisat B) in einem Mehrstufenprozeß hergestellt wird, der

   eine <u>Stufe 1</u>, in der das über Emulsionspolymerisation hergestellte und in Latexform vorliegende <u>Polymerisat</u> B1) oder Latexmischungen der Polymerisate B1) und B2) bei Temperaturen >20°C durch pH-Wert Absenkung und/oder durch Elektrolytzusatz koaguliert werden,

   eine <u>Stufe 2</u>, in der in die in der Stufe 1 erhaltene Polymersuspension, Polymerisat B2) oder der <u>Rest von B2</u>) in Latexform in einer solchen Menge eingebracht wird, bis ein Gew.-Verhältnis von B1) zu B2) von 95 bis 70 : 5 bis 30 erreicht wird, wobei gegebenenfalls gleichzeitig oder im Anschluß an den Latexzusatz weitere Koagulierungslösung zugeführt wird, so daß ein Feststoff/Wasser-Gewichtsverhältnis von 1 : 3 bis 1 : 15 erreicht ist, und eine nachfolgende

   <u>Stufe 3</u>, in der das resultierende Polymerisat von der wäßrigen Phase abgetrennt und zu einem <u>Pulver</u> mit einer durchschnittlichen Teilchengröße von 0,05 bis 5 mm aufgearbeitet wird,

   umfaßt.

2. Verfahren zur Herstellung von thermoplastischen Formmassen nach Anspruch 1 aus 60 bis 96 Gew.-% A und 4 bis 40 Gew.-% B.

3. Verfahren zur Herstellung von thermoplastischen Formmassen nach Anspruch 1 aus 70 bis 95 Gew.-% A und 5 bis 30 Gew.-% B.

4. Verfahren zur Herstellung von thermoplastischen Formmassen nach Anspruch 1 bis 3, wobei der Kautschukgehalt von B1) 60 bis 85 Gew.-% beträgt.

5. Verfahren zur Herstellung von thermoplastischen Formmassen nach Ansprüchen 1 bis 4, wobei der Kautschukgehalt von B1) 70 bis 75 Gew.-% beträgt.

6. Verfahren zur Herstellung von thermoplastischen Formmassen nach Ansprüchen 1 bis 5, wobei B1) ein Pfropfpolymerisat von Methylmethacrylat auf Dienkautschuk oder Alkylacrylatkautschuk ist und daß B2) ein Methylmethacrylat-Homopolymerisat darstellt mit einem Staudingerindex [$\eta$], gemessen in DMF bei 25°C, von 0,15 bis 0,4, angegeben in dl/g.

7. Verfahren zur Herstellung von thermoplastischen Formmassen nach Ansprüchen 1 bis 6, wobei B2) ein Copolymerisat aus Styrol und Methylmethacrylat ist.

8. Verfahren zur Herstellung von thermoplastischen Formmassen nach Ansprüchen 1 bis 7, wobei B2) ein Copolymerisat aus Methylmethacrylat und Acrylnitril ist.

9. Verfahren zur Herstellung von thermoplastischen Formmassen nach Ansprüchen 1 bis 8, wobei die Dienkautschuke oder die Alkylacrylatkautschuke einen Gelgehalt von ≧80 Gew.-% aufweisen.

10. Verfahren zur Herstellung von thermoplastischen Formmassen nach Anspruch 9, wobei die Dienkautschuke oder Alkylacrylatkautschuke einen Gelgehalt von ≧90 Gew.-% aufweisen.

11. Verfahren zur Herstellung von thermoplastischen Formmassen nach Ansprüchen 1 bis 10, wobei die Formmassen bis zu 60 Gew.-% Glasfasern enthalten.

**12.** Verfahren zur Herstellung von thermoplastischen Formmassen nach Ansprüchen 1 bis 11, wobei als Polyamidkomponente Polyamid-6, Polyamid-66 oder entsprechende Copolyamide verwendet werden.

**Claims**

**1.** A process for the production of thermoplastic moulding compounds of

A) 40 to 97% by weight polyamide and

B) 3 to 60% by weight of a polymer based on olefinically unsaturated monomers of

B1) 95 to 70% by weight, based on B), of at least one graft rubber based on particulate rubbers having rubber contents of 0.1 to 80% by weight and a glass transition temperature < 20°C and

B2) 5 to 30% by weight, based on B), of at least one thermoplastic rubber-free vinyl monomer polymer of acrylonitrile, methyl methacrylate, styrene, $\alpha$-methyl styrene and/or alkyl acrylate and the intrinsic viscosity $[\eta]$ of the ungrafted polymers (B2), as measured in DMF at 25°C, is in the range from 0.10 to 0.45 dl/g,

by mixing in the melt at temperatures at least 10°C and at most 80°C above the melting point of the polyamide,

the polymer B) being prepared in a multistep process comprising

a step 1, in which the polymer B1) prepared by emulsion polymerization and present in latex form or latex mixtures of the polymers B1) and B2) is/are coagulated at temperatures > 20°C by reduction of the pH value and/or by addition of an electrolyte,

a step 2, in which polymer B2) or the remainder of B2) is introduced in latex form into the polymer suspension obtained in step 1 in such a quantity that the ratio by weight of B1) to B2) is 95 to 70 : 5 to 30, more coagulating solution optionally being introduced during or after addition of the latex so that a ratio by weight of solids to water of 1 : 3 to 1 : 15 is obtained, and a subsequent

step 3, in which the resulting polymer is separated from the aqueous phase and worked up into a powder having an average particle size of 0.05 to 5 mm.

**2.** A process as claimed in claim 1 for the production of thermoplastic moulding compounds of 60 to 96% by weight A and 4 to 40% by weight B.

**3.** A process as claimed in claim 1 for the production of thermoplastic moulding compounds of 70 to 95% by weight A and 5 to 30% by weight B.

**4.** A process for the production of thermoplastic moulding compounds as claimed in claims 1 to 3, in which the rubber content of B1) is 60 to 85% by weight.

**5.** A process for the production of thermoplastic moulding compounds as claimed in claims 1 to 4, in which the rubber content of B1) is 70 to 75% by weight.

**6.** A process for the production of thermoplastic moulding compounds as claimed in claims 1 to 5, in which B1) is a graft polymer of methyl methacrylate on diene rubber or alkyl acrylate rubber and in which B2) is a methyl methacrylate homopolymer having an intrinsic viscosity $[\eta]$, as measured in DMF at 25°C, of 0.15 to 0.4 dl/g.

**7.** A process for the production of thermoplastic moulding compounds as claimed in claims 1 to 6, in which B2) is a copolymer of styrene and methyl methacrylate.

**8.** A process for the production of thermoplastic moulding compounds as claimed in claims 1 to 7, in which B2) is a copolymer of methyl methacrylate and acrylonitrile.

**9.** A process for the production of thermoplastic moulding compounds as claimed in claims 1 to 8, in which the diene rubbers or the alkyl acrylate rubbers have a gel content of $\geq$ 80% by weight.

**10.** A process for the production of thermoplastic moulding compounds as claimed in claim 9, in which the diene rubbers or alkyl acrylate rubbers have a gel content of $\geq$ 90% by weight.

**11.** A process for the production of thermoplastic moulding compounds as claimed in claims 1 to 10, in

17

which the moulding compounds contain up to 60% by weight glass fibres.

12. A process for the production of thermoplastic moulding compounds as claimed in claims 1 to 11, in which polyamide-6, polyamide-66 or corresponding copolyamides are used as the polyamide component.

**Revendications**

1. Procédé de préparation de masses à mouler thermoplastiques contenant

   A) 40 à 97% en poids de polyamide et

   B) 3 à 60% en poids d'un polymère à base de monomères à insaturation oléfinique, composé de

   B1) 95 à 70% en poids, par rapport à B), d'au moins un caoutchouc greffé à base de caoutchoucs en particules avec des teneurs en caoutchouc de 0,1 à 80% en poids et d'une température de transition vitreuse inférieure à 20° C, et

   B2) 5 à 30% en poids, par rapport à B), d'au moins un polymère de monomère vinylique, thermoplastique, sans caoutchouc, à base d'acrylonitrile, de méthacrylate de méthyle, de styrène, d'α-méthylstyrène et/ou d'acrylate d'alkyle, l'indice de Staudinger [$\eta$] du polymère non greffé (B2), mesuré dans le DMF à 25° C, étant de 0,10 à 0,45 dl/g,

   en effectuant le mélange dans la masse en fusion, à des températures supérieures d'au moins 10° C et d'au plus 80° C au point de fusion du polyamide, le polymère B) étant fabriqué par un procédé à plusieurs étapes, comportant

   une première étape, dans laquelle on coagule le polymère B1) préparé par polymérisation en émulsion et se présentant sous forme de latex, ou des mélanges de latex des polymères B1) et B2) à des températures supérieures à 20° C par abaissement du pH et/ou par addition d'électrolyte,

   une deuxième étape, dans laquelle on introduit le polymère B2) ou le reste de B2) sous forme de latex dans la suspension de polymère obtenue dans la première étape en une quantité telle qu'on atteigne un rapport en poids entre B1) et B2) de 95 à 70 : 5 à 30, et au cours de laquelle on ajoute éventuellement encore, simultanément ou après l'addition de latex, de la solution coagulante te de façon à atteindre un rapport pondéral matières solides/eau de 1 : 3 à 1 : 15, et

   une troisième étape suivante dans laquelle le polymère obtenu est séparé de la phase aqueuse et retraité en une poudre d'une granulométrie moyenne de 0,05 à 5 mm.

2. Procédé de préparation de masses à mouler thermoplastiques selon la revendication 1 composées de 60 à 96% en poids de A et 4 à 40% en poids de B.

3. Procédé de préparation de masses à mouler thermoplastiques selon la revendication 1, composées de 70 à 95% de A et 5 à 30% de B.

4. Procédé de préparation de masses à mouler thermoplastiques selon les revendications 1 à 3, dans lequel la teneur en caoutchouc de B1) est de 60 à 85% en poids.

5. Procédé de préparation de masses à mouler thermoplastiques selon les revendications 1 à 4, dans lesquelles la teneur en caoutchouc de B1 est de 70 à 75% en poids.

6. Procédé de préparation de masses à mouler thermoplastiques selon les revendications 1 à 5, dans lequel B1) est un polymère de greffage de méthacrylate de méthyle sur du caoutchouc diénique ou du caoutchouc d'acrylate d'alkyle et B2) est un homopolymère de méthacrylate de méthyle avec un indice de Staudinger [$\eta$], mesuré dans le DMF à 25° C, de 0,15 à 0,4, exprimé en dl/g.

7. Procédé de préparation de masses à mouler thermoplastiques selon les revendications 1 à 6, dans lequel B2) est un copolymère de styrène et de méthacrylate de méthyle.

8. Procédé de préparation de masses à mouler thermoplastiques selon les revendications 1 à 7, dans lequel B2 est un copolymère de méthacrylate de méthyle et d'acrylonitrile.

9. Procédé de préparation de masses à mouler thermoplastiques selon la revendication 9, dans lequel les caoutchoucs diéniques ou les caoutchoucs d'acrylate d'alkyle présentent une teneur en gel supérieure ou égale à 80% en poids.

10. Procédé de préparation de masses à mouler thermoplastiques selon la revendication 9, dans lequel les caoutchoucs diéniques ou les caoutchoucs d'acrylate d'alkyle présentent une teneur en gel supérieure ou égale à 90% en poids.

11. Procédé de préparation de masses à mouler thermoplastiques selon les revendications 1 à 10, dans lequel les masses à mouler contiennent jusqu'à 60% en poids de fibres de verre.

12. Procédé de préparation de masses à mouler thermoplastiques selon les revendications 1 à 11, dans lequel on utilise comme composant polyamide du polyamide-6, du polyamide-66 ou des copolyamides correspondants.